(19)

**Europäisches Patentamt**

**European Patent Office**

**Office européen des brevets**

(11) **EP 4 653 086 A1**

(12) **EUROPEAN PATENT APPLICATION**

(43) Date of publication:
**26.11.2025   Bulletin 2025/48**

(21) Application number: **24177917.2**

(22) Date of filing: **24.05.2024**

(51) International Patent Classification (IPC):
*B01J 21/06* (2006.01)    *B01D 53/00* (2006.01)
*B01J 21/16* (2006.01)    *B01J 23/22* (2006.01)
*B01J 23/847* (2006.01)   *B01J 35/61* (2024.01)
*B01J 37/00* (2006.01)    *B01J 37/02* (2006.01)
*B01J 37/04* (2006.01)    *B01J 37/08* (2006.01)

(52) Cooperative Patent Classification (CPC):
**B01J 21/16; B01D 53/8628; B01D 53/9418;
B01J 21/063; B01J 23/22; B01J 23/8472;
B01J 35/615; B01J 37/0009; B01J 37/0203;
B01J 37/04; B01J 37/08; B01J 37/088;**
B01D 2251/2062; B01D 2255/20707;
B01D 2255/20723;                          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Treibacher Industrie AG
9330 Treibach-Althofen (AT)**

(72) Inventors:
• **Casanova, Marzia
  9330 Althofen (AT)**
• **Sagar, Amod
  9330 Althofen (AT)**
• **Czakler, Matthias
  9330 Althofen (AT)**
• **Truscott, Byron
  9020 Klagenfurt (AT)**

(74) Representative: **Schwarz & Partner Patentanwälte
GmbH
Patentanwälte
Wipplingerstraße 30
1010 Wien (AT)**

(54) **CATALYST COMPOSITION USEFUL FOR SELECTIVE CATALYTIC REDUCTION**

(57)   The present invention relates to a calcined catalyst composition comprising a mixture of
a) a Vanadium oxide supported by $TiO_2$ and
b) a non-pillared clay,
wherein the composition has a BET surface area ranging from 100 to 160 $m^2/g$.

**EP 4 653 086 A1**

**(Cont. next page)**

(52) Cooperative Patent Classification (CPC): (Cont.)
     B01D 2255/20738

**Description**

The present invention relates to a catalyst composition and its use thereof as selective catalytic reduction (SCR) catalyst for removing nitrogen oxides.

**Background of the Invention**

Due to increasingly stringent regulations aimed at reducing the $NO_x$ concentration levels from industrial emissions, the research of suitable catalytic materials that can meet new standards is under study and development. A variety of technologies are available for the abatement of $NO_x$, but the so-called Selective Catalytic Reduction (SCR) with $NH_3$ as reducing agent is the most commonly applied. $NH_3$-SCR, representing the most effective method for removing $NO_x$ from stationary sources such as power plants, industrial boilers, steel mills etc., requires the development of suitable catalysts that show high catalytic activity and resistance to poisons under increasingly demanding conditions.

The $NH_3$-SCR technology is well known to show high denitration (deNO$_x$) performances in the temperature range of 300 to 420°C when commercially available $V_2O_5$-$WO_3$($MoO_3$)/$TiO_2$ catalysts are applied for the treatment of flue gases from power plants. In this temperature window, activity is high also in the presence of water in the gas feed.

A very different scenario is opened in the case of the treatment of the emissions from non-electric industries, like steel, cement, glass, ceramic and so on, where the temperature of the exhausts varies from 220°C and below.

For instance, Mn and Cu oxides are known to show good performances at 100°C to 200°C.

However, current challenges consist in the development of industrial low-temperature SCR catalysts that are also sulfur tolerant.

It is known in the art that the presence of $SO_2$ in the flue gas represents a big challenge due to its potential to deactivate catalysts by degrading its performance.

However, SCR catalysts are generally also active in oxidizing $SO_2$ to $SO_3$. For instance, vanadia is active in the undesired $SO_2$ oxidation to $SO_3$. $TiO_2$ is known to be a suitable support for vanadia because it is weakly and reversibly sulfated and the stability of sulfates is weaker in comparison to other supports, such as $Al_2O_3$ or $ZrO_2$ (G. Busca et al., Chemical and mechanistic aspects of the selective catalytic reduction of NOx by ammonia over oxide catalysts: A review, Applied Catalysis B 18, 1-36 (1998)).

As a result, in case of low concentrations of $SO_2$, the $V_2O_5$/$TiO_2$ based catalysts represent a suitable option against sulfur deactivation in comparison to Cu- or Fe-zeolites or Mn- or Cu-based SCR catalysts. (J-K Lai and I. Wachs, A perspective on the selective catalytic reduction (SCR) of NO with NH3 by supported V2O5-WO3/TiO2 catalysts, ACS Catalysis 8, 6537-6551 (2018)).

However, even in extremely low concentrations, $SO_2$ represents a huge problem for the denitration systems. The conversion of less than 1% $SO_2$ to $SO_3$ is sufficient to produce liquid $NH_4HSO_4$ - ammoniumbisulfate (ABS). ABS originates from $SO_3$, which is formed through $SO_2$ oxidation catalyzed by high vanadia loading according to the equation:

$$NH_3(g) + H_2O(g) + SO_3(g) \rightarrow NH_4HSO_4 \qquad (I)$$

The liquid ABS condensing in the catalyst pores block the catalytically active sites leading to deactivation.

ABS has a dew point between 280°C and 320°C and a melting point around 150°C (I. Song et al., Simple physical mixing of zeolite prevents sulfur deactivation of vanadia catalyst for NOx removal, Nature communications 12, 901 (2021); J.P Dunn et. al., Oxidation of SO2 over supported metal oxide catalysts, Journal of Catalysis 181, 233-243 (1999); Guo et al., Conquering ammonium bisulfate poison over low-temperature NH3-SCR catalysts: A critical review. Applied Catalysis B 297, 120388 (2021)).

This means that when operating below the dew point of ABS, the catalysts pores can be blocked by ABS, and deNO$_x$ activity decreases progressively.

The ABS can be removed through thermal regeneration processes. In order to avoid the necessity of regeneration at a temperature above the ABS dew point, the formation of ABS can be avoided ab initio.

Regarding the currently available catalysts, none of them is suitable to overcome the current challenges.

If exposed to $SO_2$-containing exhausts, Mn- or Cu- based catalysts immediately suffer deactivation due to the formation of highly stable metal sulfates, while VW/Ti catalysts are known to be deactivated by ABS deposition (Y Wang et. al., Novel methods for assessing the $SO_2$ poisoning effect and thermal regeneration possibility of MOx-$WO_3$/$TiO_2$ (M = Fe, Mn, Cu, and V) catalysts for $NH_3$-SCR, Environmental Science & Technology 54, 12612-12620 (2020)).

To improve sulfur resistance in a low temperature range, for instance, SCR catalyst including zeolite can be used. US 2022/0226803 A1 describes an SCR catalyst composition comprising zeolite, $TiO_2$, and $V_2O_5$ showing SCR activity in the temperature range of 180 to 400°C and improved sulfur tolerance.

In order to modulate the properties of SCR catalysts, also clays have been used for various applications.

For instance, CN 105727935 A, CN 106423192 B, CN112844441A, KR 20170028641 A, CN 109999828 A, CN114849682 A, and CN 102225335 A describe the use of pillared clays for the preparation of $NH_3$-SCR catalysts with transition metals such as Mn, Cu or Zr as the main active component. These catalysts are free from vanadium as an active phase.

Furthermore, catalyst compositions comprising pillared clays with vanadium as an active component are also described in the prior art.

US 6,475,944 B1 describes an SCR catalyst based on a Ti-pillared clay (Ti-PILC) used as a support for $V_2O_5$ for the removal of $NO_x$ under $SO_2$-containing flue gas. It is reported that $SO_2$ poisoning resistance can be controlled by adjusting the structural characteristics of the supporting pillared clay.

KR 100415434 B1 describes a pillared bentonite clay with $TiO_2$ comprising vanadium. SCR degradation is also observed, showing that the catalysts described therein are not $SO_2$ resistant.

US 9,371,765 B2 describes a metal substrate coated with an SCR catalyst based on $V_2O_5$, $WO_3$, $Al_2O_3$ supported on a Ti-PILC. The patent discloses initial activity of the catalyst at low temperature in the presence of $SO_2$ in the feed, but durability against $SO_2$ resistance for a longer period is not discussed.

CN 114733510 A discloses an SCR catalyst, wherein a $V_2O_5$-$TiO_2$ doped pillared clay is taken as a catalytic carrier and ceria is taken as an active substance. The document relates to improvement of the mechanical strength of the catalyst, wherein the deNO$_x$ efficiency has been tested at higher temperatures in the range of 250 to 450°C.

EP 3 323 504 B1 describes an SCR catalyst including a support in which Ti-PILC is mixed with $TiO_2$ as a carrier, wherein the active phase is $V_2O_5$ and $WO_3$. It is reported that the SCR catalyst has a higher deNO$_x$ performance and higher production convenience. The SCR catalyst is evaluated under $NO_x$ in the feed without any specification of the relative amount of NO and $NO_2$, wherein no comparison without $SO_2$ in the feed is disclosed to evaluate the effect on sulfur resistance of this composition. Furthermore, also durability of the denitration activity of the tested catalyst cannot be derived from the patent since the duration of the deNO$_x$ experiments is not mentioned.

Further prior art discusses the use of clays that are not pillared as part of SCR catalysts. Such clays are rather used as a silica source and as binders to improve the mechanical properties of e.g. pastes for extrusion: CN 106179320 A relates to a wear-resistant SCR catalyst comprising a catalytic layer prepared from $TiO_2$, montmorillonite and other components coated on a stainless-steel substrate. The used montmorillonite clay is introduced as a silicon oxide compound to enhance the anti-wear properties of the catalyst. CN 106179320 A does not discuss using vanadium or any testing relating to SCR activity or sulfur resistance.

DE 3531871 A1 describes a process for producing a catalyst that contains a water insoluble vanadyl sulfate, obtained by reducing a pentavalent vanadium compound in the presence of a reducing agent and a solvent, such as oxalic acid, citric acid and sulfuric acid. After adding ammonium salt, barium sulfate, titanic acid and a clay mineral, the resulting paste is formed into a honeycomb shape using an extruder. The clay-like product was then dried and calcined to obtain the honeycomb-like catalyst having a specific surface of 64 $m^2$/g. In particular, DE 3531871 A1 discusses that the use of the clay mineral significantly improves the moldability of the extrudate when formed into a honeycomb shape and also enhances the wear resistance of the catalyst. No influence of clay on the sulfur resistance is mentioned therein. The role of the clay is attributed to the enhanced mechanical and anti-abrasion properties of the final honeycomb catalyst.

**Short Description of the Invention**

The catalyst compositions disclosed in the state-of-the-art do not fulfill all the requirements in terms of deNO$_x$ performance as well as resistance against sulfur degradation and deactivation caused by ABS formed when the catalyst operates in the low temperature range, particularly below 200°C.

It is the aim of the present invention to provide an SCR catalyst, which has higher catalytic activity and high sulfur resistance at low temperatures compared to state-of-the-art materials.

The object of the present invention is solved by a calcined catalyst composition comprising a mixture of

a) a vanadium oxide supported by $TiO_2$ and
b) a non-pillared clay,

wherein the composition has a BET surface area ranging from 100 to 160 $m^2$/g.

In a further aspect, the present invention relates to a process for producing the catalyst composition disclosed herein.

Finally, the catalyst composition of the present invention is useful as an SCR catalyst for removing nitrogen oxides.

Preferred embodiments of the present invention are defined in the dependent claims.

**Detailed Description of the Invention**

Surprisingly it has been discovered that the catalyst composition of the present invention shows positive effects on the removal of nitrogen oxides from exhausts including $SO_2$.

Specifically, the present invention is based on the surprising finding that the catalyst composition showed enhanced long-term sulfur resistance and $NO_x$ conversion performance at low temperatures, in particular below 200°C, when compared to state-of-the-art materials.

Furthermore, the catalytic composition of the present invention shows high resistance against deactivation caused by ammonia-sulfur compound ABS ($NH_4HSO_4$) in the low-temperature range, where ABS deposition is more pronounced, as discussed above.

As an active component, vanadium oxide assures the exceptional low-temperature SCR performance of the catalyst composition, when supported by $TiO_2$.

Catalysts composition comprising vanadium oxide supported by $TiO_2$ are known as such from the prior art discussed above and can be made by impregnating a $TiO_2$ containing substrate with vanadium oxide or, in particular, a precursor thereof.

Preferably, the $TiO_2$ is present in the anatase form as the main phase. Other phases, such as rutile phase, can also be present, but preferably only to a minor extent.

In addition, it has been found that the non-pillared clay is also an essential component in the catalyst composition of the present invention.

It was found that the non-pillared clay in the composition of the present invention hinders sulfur deposition and enhances the catalyst's resistance against sulfur poisoning due to the deposition of ABS originating from the reaction of $SO_2$, $NH_3$ and water in the exhaust. Such a surprising effect has not been described in the prior art so far, where clay is merely used as a support and/or to enhance the mechanical stability of the catalyst.

The presence of such a non-pillared clay is detectable via XRD (X-ray diffraction) measurements.

The assignment of a non-pillared clay can be determined from the X-ray diffraction pattern obtained by XRD analysis, wherein a reflex typical for non-pillared clay is present at around 4.4 to 8.8° 2θ, as reported in literature by e.g., Yang et al., TiO2-pillared Clays with Well-ordered Porous Structure and Excellent Photocatalytic Activity, RSC Advances 5, 8210-8215 (2015), Butman et al., Photocatalytic and adsorption properties of TiO2-pillared montmorillonite obtained by hydrothermally activated intercalation of titanium polyhydroxo complexes, Beilstein Journal of Nanotechnology 9, 364-378 (2018) as well as by Binitha and Sugunan in their publication "Preparation, characterization and catalytic activity of titania pillared montmorillonite clays" in Microporous and Mesoporous Materials 93, 82-89 (2016). In contrast, pillared clays do not show reflexes at this position, as known in the art.

XRD measurements can be carried out by using a powder diffractometer with $CuK_\alpha$ - radiation and proportional counter or PIXcel-detector. Measurements can usually be performed in reflection geometry. The powder diffractometric measurements can be controlled and handled with a suitable program suite. Phase analyses can be performed with a search routine which refers to the ICDD PDF2 or ICSD database. Additionally, Rietveld-analyses and in-situ temperature-programmed X-Ray experiments can be performed.

In addition, a non-pillared clay distinguishes from a pillared clay in that the relative $Al_2O_3$ and $SiO_2$ content of the non-pillared clay is enhanced compared to pillared clay. In particular, it has been found that the pillaring process conducted in an acidic environment changes the relative amount of aluminum and silica (expressed $Al_2O_3$ and $SiO_2$) in the clay resulting in an increased amount $Al_2O_3$ and $SiO_2$ in non-pillared clays. Also, it is known in the art that, the formation of pillars can be initiated using pillaring solutions, such as metal solutions. For instance, when using a titanium-containing pillaring solution, an increased amount of Ti in the pillared clay (compared to non-pillared clay) can also be determined.

This is reflected also in the catalyst composition and can be identified by means of elemental analysis, such as X-ray fluorescence spectroscopy (XRF).

As mentioned above, pillared clays are usually prepared by intercalating metal solutions containing ions of Ti, Al, Zr, etc. into the clay layers.

As used herein, the "non-pillared clay" means an unmodified clay material that has not been impregnated with any metal solution, such as titania, alumina, zirconia or other metal ions.

Furthermore, the presence of non-pillared clays can be determined by other methods known in the art, such as nuclear magnetic resonance spectroscopy (NMR) or transmission electron microscopy (TEM).

In addition, it turned out that the BET surface area of the catalyst composition of the present invention plays an important role in low-temperature SCR activity and sulfur resistance. Materials having a BET surface area below or above a range of 100 to 160 $m^2/g$ exhibit a poorer performance compared to the catalyst composition according to the invention.

The BET surface area can be determined according to the test methods described further below.

In a preferred embodiment of the present invention, the catalyst composition is present in the form of a powder or granulate, as opposed to, e.g. extruded monolithic compositions as disclosed in DE 3531871 A1.

In a preferred embodiment of the catalyst composition according to the invention the composition comprises 4 to 10 % by weight of the vanadium oxide, expressed as $V_2O_5$.

The amount of vanadium oxide can be determined by elemental analysis methods, such as XRF.

"Vanadium oxides", as used herein, refers to compounds having the generic formula of $VO_x$. While according to the present invention, the amount of vanadium oxides is expressed as $V_2O_5$, the oxides do not need to be present actually as $V_2O_5$. Rather, the vanadium oxide is present in amorphous form in the catalyst composition and is present especially as monomeric or polymeric $VO_x$ species. For the purposes of the present invention, the term "vanadium oxides" does not include metal vanadates.

Lower vanadium oxide concentrations than 4% by weight can result in an inappropriate vanadium coverage of the catalyst and, consequently, in a low SCR activity. On the other hand, a vanadium oxide content exceeding 10 % by weight can result in a too high $VO_x$ surface coverage, leading to faster deactivation. A high vanadium oxide content can also be detrimental to resistance against sulfur poisoning. Vanadium oxides are known to promote the undesired $SO_2$ oxidation reaction to $SO_3$, which represents the starting point for ABS formation through reaction with $NH_3$ and $H_2O$, as described above.

According to another preferred embodiment, the catalytic composition is characterized in that the composition comprises $TiO_2$ in an amount of 75 to 95 % by weight.

In another further preferred embodiment, the composition is characterized in that the non-pillared clay comprises or consists of montmorillonite.

In particular, the non-pillared clay can comprise or consists of montmorillonite as such or as montmorillonite-containing material, such as bentonite, or mixtures thereof. The presence of montmorillonite in the catalytic composition can be determined by known methods in the art, such as XRD.

Preferably, the composition comprises the non-pillared clay in an amount of 4 to 15 % by weight.

The amount of non-pillared clay can be determined by measuring the amount of Al of the composition, expressed as $Al_2O_3$, which can also be detected by XRF.

The non-pillared clay in the catalyst composition also comprises iron. Due to the iron already contained in the clay, Fe can be present in the catalytic composition in an amount of 0.5 wt% or lower, depending on the amount of clay present in the composition.

But preferably, the catalyst composition of the present invention comprises iron in an amount of 1 to 3% by weight, preferably 1.5 to 3% by weight, calculated as $Fe_2O_3$. In this case, the amount of Fe in the composition is not only made up solely by the content of iron in the clay but by an additional amount of added iron during the preparation, e.g., in the form of $Fe_2O_3$.

The present invention also provides a process for the preparation of a catalyst composition as defined herein, comprising the steps of:

a) Calcining a $TiO_2$ precursor to obtain a calcined $TiO_2$ powder, wherein the calcined $TiO_2$ powder has a BET surface area ranging from 125 to 160 $m^2/g$,
b) Impregnating the calcined $TiO_2$ powder of step a) with a precursor of vanadium oxide,
c) Mixing of the mixture of step b) with a non-pillared clay,
d) Calcining the mixture of step c), and
e) Optionally granulating the mixture of step c) before step d) to obtain the catalyst composition in granulated form.

For the preparation of a catalyst of the present invention a $TiO_2$ precursor is calcined.

The "$TiO_2$ precursor" may essentially contain $TiO_2$ but can further comprise titanium hydroxide.

Calcination may be carried out as appropriate, e.g. according to, e.g. analogously to a method as conventional, e.g. by heating the powder preferably in the presence of oxygen, more preferably under air at appropriate temperature. The obtained calcined $TiO_2$ powder has a BET surface area ranging from 125 to 160 $m^2/g$, which is required to obtain the BET surface area of the catalytic composition of the present invention.

In case a $TiO_2$ powder having a BET surface area higher than 160 $m^2/g$ is used in the present catalytic composition, it is believed that the coverage of $VO_x$ of the catalyst composition would be insufficient, resulting in a low SCR activity. In turn, a BET surface area of the $TiO_2$ powder lower than 125 $m^2/g$ is believed to result in a too high $VO_x$ surface coverage, leading to faster deactivation of the catalyst.

An appropriate temperature, as discussed above, for performing the calcination in step a) and/or d) can be in a range between 250 to 350°C, preferably for 3 to 5 hours. The calcination temperature and duration can be adapted depending on the properties of the starting material, as known in the art, to obtain the desired BET surface area of the calcined powder. The calcination in steps a) and d), respectively, can be performed under different conditions, for instance, at different temperatures and/or durations.

The precursor of the vanadium oxide employed in step b) may preferably be a solution of a vanadium oxide precursor, preferably a solution of vanadium oxalate or a metavanadate solution.

According to another preferred embodiment of the present invention, $Fe_2O_3$ is added in the course of step a), b) and/or c).

The obtained calcined catalyst composition may be in powdered or granulated form. To obtain the granulated form, the mixture of step c) can be granulated, preferably by using deionized water in high shear force mixer, before calcining.

Alternatively, the catalyst composition can be transformed into a shaped form. The shaping can be performed either before or after calcination. For instance, the catalyst composition can be extruded as a monolith or may be used for making a coated catalyst by applying the composition in a washcoat process and coating a substrate. The substrate can be selected from a metal flow-through substrate, a ceramic flow-through substrate, a wall-flow filter, a sintered metal filter, a partial filter, and an extruded catalyst honeycomb.

The catalyst composition of the present invention is useful as a SCR catalyst for removing nitrogen oxides. In particular, the composition of the present invention can be further applied to other substrates, such as a coating on filter candles or honeycomb substrates. The substrate can be, for example, a metallic or ceramic substrate. The composition of the present invention, in particular in granulated form, can also be incorporated into filter bags.

In another preferred embodiment of the present invention the catalyst composition can be employed at temperatures of 200°C or lower, preferably from 160°C to 200°C, most preferably from 180°C to 200°C.

The present invention also provides a method for removing nitrogen oxides, e.g. for selective catalytic reduction of $NO_x$, in exhaust gases, characterized in that a process stream, such as an exhaust gas is contacted with the catalytic composition described herein.

The present invention is explained in more detail in the following examples and comparative examples, without being limited thereto.

**Examples**

**Sample preparation**

All inventive examples were prepared in a high-shear force mixer (Manufacturer: Eirich, 1l or 5l) in order to obtain, respectively, approx. 100g or 1200g of material in each batch.

Example 1: 7.6% $V_2O_5$ - 1.9% $Fe_2O_3$ - 4.76% Montmorillonite/$TiO_2$

In order to obtain 155g of the catalyst powder, 135g of $TiO_2$ (CristalACTiV ™G5 from Tronox calcined at 300°C showing a BET surface area value of 135 $m^2$/g) and 3g of $Fe_2O_3$ (Yuxin Pigments) were introduced in a 1l high-shear force mixer (Eirich) and mixed for 60s. A vanadium oxalate solution characterized by 14 wt.% $V_2O_5$ content (Treibacher Industrie AG) was slowly added to the powder through a funnel while continuous stirring to obtain a loading of 8% $V_2O_5$ on the powder. After the complete addition of the vanadium oxalate solution, 7.5g montmorillonite K10 (Aldrich) were added and then mixed up to 300s for complete homogenization. The wet powder was directly calcined at 300°C/5h in a static air muffle furnace. The calcined material was sieved through a 250 μm sieve. Finally, the calcined material was pressed into pellets and sieved in the range of 200 to 315 μm for the catalytic tests described below.

Examples 2-15

Preparation of catalyst compositions as listed in Table 1.

The catalyst compositions referred to in examples 2-15 and as disclosed in Table 1 below were prepared analogously to the procedure disclosed in Example 1 but using appropriate starting materials.

Table 1

| Ex. | Composition | $TiO_2$ [g] | $V_2O_5$ [% loading] | $Fe_2O_3$ [g] | Non-pillared clay [g] | Other [g] |
|-----|-------------|-------------|---------------------|---------------|----------------------|-----------|
| 1 | 7.6% $V_2O_5$ - 1.9% $Fe_2O_3$ - 4.76% Montmorillonite/$TiO_2$ | 135 | 7.6 | 3 | 7.5 montmoril-lonite | |
| 2 | 7.3% $V_2O_5$ - 1.8% $Fe_2O_3$ - 9.1% Mon-tmorillonite/$TiO_2$ | 136.4 | 7.3 | 3 | 15 montmorillo-nite | |
| 3 | 7% $V_2O_5$ - 1.7% $Fe_2O_3$ - 13% Mon-tmorillonite/$TiO_2$ | 136.4 | 7 | 3 | 22.5 montmoril-lonite | |

(continued)

| Ex. | Composition | TiO$_2$ [g] | V$_2$O$_5$ [% loading] | Fe$_2$O$_3$ [g] | Non-pillared clay [g] | Other [g] |
|---|---|---|---|---|---|---|
| 4 | 7.3% V$_2$O$_5$ - 1.8% Fe$_2$O$_3$ - 4.7% Montmorillonite - 4.7% Zeolite/TiO$_2$ | 136.4 | 7.3 | 3 | 7.5 montmorillonite | 7.5 HY-zeolite (CBV720 from Zeolyst) |
| 5 | 7.6% V$_2$O$_5$ - 4.76% Montmorillonite/-TiO$_2$ | 139.4 | 7.6 | | 7.5 montmorillonite | |
| 6 | 7.7% V$_2$O$_5$ - 9.1% Montmorillonite/TiO$_2$ | 138.6 | 7.7 | | 7.5 montmorillonite | |
| 7 | 5.7% V$_2$O$_5$ - 4.76% Montmorillonite/-TiO$_2$ | 95 | 5.7 | | 5 montmorillonite | |
| 8 | 5.5% V$_2$O$_5$ - 9.1% Montmorillonite/TiO$_2$ | 95 | 5.5 | | 10 montmorillonite | |
| 9 | 5.4% V$_2$O$_5$ - 10.7% Montmorillonite/-Ti02 | 95 | 5.4 | | 12g montmorillonite | |
| 10 | 7.6% V$_2$O$_5$- 4.76% Montmorillonite/-Ti02 | 93 | 7.6 | | 5 montmorillonite | |
| 11 | 7.3% V$_2$O$_5$ - 9.1% Montmorillonite/TiO$_2$ | 93 | 7.3 | | 10 montmorillonite | |
| 12 | 7.2% V$_2$O$_5$ - 10.7% Montmorillonite/-Ti02 | 93 | 7.2 | | 12 montmorillonite | |
| 13 | 9.5%V$_2$O$_5$-4.76%Montmorillonite/TiO$_2$ | 91 | 9.5 | | 5 montmorillonite | |
| 14 | 9.1% V$_2$O$_5$- 9.1% Montmorillonite/Ti02 | 91 | 9.1 | | 10 montmorillonite | |
| 15 | 9.5% V$_2$O$_5$ - 4.76% Bentonite/TiO$_2$ | 139.4 | 9.5 | | 7.5 bentonite (Aldrich) | |

Comparative Example 1: 8% V$_2$O$_5$ - 2% Fe$_2$O$_3$/TiO$_2$

In order to prepare 1250g of the catalyst powder, 1136.36g of TiO$_2$ (CristalACTiV ™G5 from Tronox calcined at 300°C showing a BET surface area value of 135 m$^2$/g) and 22.25g of Fe$_2$O$_3$ (Yuxin Pigments) were introduced in a 5l high-shear force mixer (Eirich) and mixed for 300s. A vanadium oxalate solution characterized by 14 wt.% V$_2$O$_5$ content (Treibacher Industrie AG) was slowly added to the powder through a funnel while continuous stirring. After the complete addition of the vanadium oxalate solution, the material was mixed up to 700s for complete homogenization. The wet powder was directly calcined at 300°C/5h in a static air muffle furnace. The calcined material was sieved through a 250 μm sieve. Finally, the calcined material was pressed into pellets and sieved in the range of 200-315 μm for the catalytic tests described below.

Comparative Example 2: 7.2% V$_2$O$_5$ - 1.8% Fe$_2$O$_3$ - 10% HY-Zeolite/TiO$_2$

1375g of a zeolite-containing catalyst, as described in US 2022/0226803 A1, was prepared: 1125g of TiO$_2$ (CristalACTiV ™G5 from Tronox calcined at 300°C showing a BET surface area value of 135 m$^2$/g) and 25g of Fe$_2$O$_3$ (Yuxin Pigments) were introduced in a 5l high-shear force mixer l (Eirich) and mixed for 300s. A vanadium oxalate solution characterized by 14 wt.% V$_2$O$_5$ content (Treibacher Industrie AG) was slowly added to the powder through a funnel while continuous stirring to obtain a loading of 8% V$_2$O$_5$ on the powder. After complete addition of the vanadium oxalate solution, 125g HY-zeolite (CBV20 from Zeolyst) were added and then mixed up to 700s for complete homogenization. The wet powder was directly calcined at 300°C/5h in a static air muffle furnace. The calcined material was sieved through a 250 μm sieve. Finally, the calcined material was pressed into pellets and sieved in the range of 200-315 μm for the catalytic tests described below.

Comparative Example 3: 3% $V_2O_5$ - 3% $WO_3$ - 10% pillared bentonite/AK1®-$TiO_2$

50g of the material were prepared according to the method described in EP 3 323 504 B1:
The first step for preparing the material consists in producing a Ti-pillared bentonite. To produce 75g of pillared clay, 114.8 mL of titanium isopropoxide solution (Sigma-Aldrich) were mixed in 459.3 mL of acetic acid. 75g of bentonite were suspended in 3.75 L of deionized water at 50°C. After mixing for complete homogenization, the suspension and the pillaring solution were mixed and the pH was adjusted to 7 with the addition of $NH_4OH$ solution. The suspension was continuously mixed at 50°C for 24 hours. The wetcake was then filtered and washed several times with deionised water. The sample was then dried at 110°C overnight and then, finally, heated up to 350°C with a heating rate of 2°C/min and calcined for 5 hours.
After the preparation of the pillared bentonite, the SCR catalyst was prepared. To obtain 50g of catalyst, 42.4g of ammonium metavanadate ($NH_4VO_3$, Treibacher Industrie AG) were dissolved in deionised water at 80°C to obtain a clear solution. pH was adjusted to 2-3 with the addition of 2.09g of oxalic acid. 1.67g of ammonium metatungstate (AMT) were added to the solution and stirred for 5 minutes for complete homogenization. 42.42g of commercially available $TiO_2$ powder (AK1® from Venator with BET surface area of 91 $m^2/g$) and 5.0 of the pillared bentonite obtained in the previous step were added to the solution and stirred for homogenization. The wet cake was then dried overnight at 110°C and the sample was calcined at 500°C for 5 hours. The calcined material was sieved through a 250 $\mu$m sieve. Finally, the calcined material was pressed into pellets and sieved in the range of 200-315 $\mu$m for the catalytic tests described below.

Comparative Example 4: 3% $V_2O_5$ - 3% $WO_3$ - 10% pillared bentonite/fresh CristalACTiV™G5-$TiO_2$

50g of the material were prepared according to the method described in EP 3 323 504 B1:
The Ti-pillared bentonite was prepared as in Comparative Example 3.
To obtain 50g of catalyst, 42.4g of ammonium metavanadate ($NH_4VO_3$, Treibacher Industrie AG) were dissolved in deionized water at 80°C to obtain a clear solution. pH was adjusted to 2-3 with the addition of 2.09g of oxalic acid. 1.67g of ammonium metatungstate (AMT) were added to the solution and stirred for 5 minutes for complete homogenization. 42.42g of commercially available "fresh" $TiO_2$ (CristalACTiV™ G5 from Tronox showing a BET surface area value of 276 $m^2/g$) and 5g of the pillared bentonite obtained in the previous step were added to the solution and stirred for homogenization. The wet cake was then dried overnight at 110°C and the sample was calcined at 500°C for 5 hours. The calcined material was sieved through a 250 $\mu$m sieve. Finally, the calcined material was pressed into pellets and sieved in the range of 200-315$\mu$m for the catalytic tests described below.

Comparative Example 5: 3% $V_2O_5$ - 3% $WO_3$ - 10% pillared bentonite/calcined CristalACTiV™G5-$TiO_2$

50g of the material were prepared according to the method described in EP 3 323 504 B1:
The Ti-pillared bentonite was prepared as in Comparative Example 3.
To obtain 50g of catalyst, 42.4g of ammonium metavanadate ($NH_4VO_3$, Treibacher Industrie AG) were dissolved in deionized water at 80°C to obtain a clear solution. pH was adjusted to 2-3 with the addition of 2.09g of oxalic acid. 1.67g of ammonium metatungstate (AMT) were added to the solution and stirred for 5 minutes for complete homogenization. 42.42g of $TiO_2$ (CristalACTiV™G5 from Tronox calcined at 300°C and showing a BET surface area value of 135 $m^2/g$) and 5g of the pillared bentonite obtained in the previous step were added to the solution and stirred for homogenization. The wet cake was then dried overnight at 110°C and the sample was calcined at 500°C for 5 hours. The calcined material was sieved through a 250 $\mu$m sieve. Finally, the calcined material was pressed into pellets and sieved in the range of 200-315$\mu$m for the catalytic tests described below.

Comparative Example 6: 3% $V_2O_5$ - 3% $WO_3$ - 10% pillared montmorillonite/AK1®-$TiO_2$

50g of the material were prepared according to the method described in EP 3 323 504 B1:
The first step for preparing the material consists in producing a Ti-pillared montmorillonite. To produce 75g of pillared clay, 114.8 mL of titanium isopropoxide solution (Sigma-Aldrich) were mixed in 459.3 mL of acetic acid. 75g of montmorillonite were suspended in 3.75 L of deionized water at 50°C. After mixing for complete homogenization, the suspension and the pillaring solution were mixed and the pH was adjusted to 7 with the addition of $NH_4OH$ solution. The suspension was continuously mixed at 50°C for 24 hours. The wet cake was then filtered and washed several times with deionized water. The sample was then dried at 110°C overnight and then, heated up to 350°C with a heating rate of 2°C/min and calcined for 5 hours.
To obtain 50g of catalyst, 42.4g of ammonium metavanadate ($NH_4VO_3$, Treibacher Industrie AG) were dissolved in deionized water at 80°C to obtain a clear solution. pH was adjusted to 2-3 with the addition of 2.09g of oxalic acid. 1.67g of ammonium metatungstate (AMT) were added to the solution and stirred for 5 minutes for complete homogenization.

42.42g of commercially available $TiO_2$ powder (AK1® from Venator with BET surface area value of 91 m$^2$/g) and 5g of the pillared montmorillonite obtained in the previous step were added to the solution and stirred for homogenization. The wet cake was then dried overnight at 110°C and the sample was calcined at 500°C for 5 hours. The calcined material was sieved through a 250 μm sieve. Finally, the calcined material was pressed into pellets and sieved in the range of 200-315μm for the catalytic tests described below.

Comparative Example 7: 7.3% $V_2O_5$ - 9.1% Montmorillonite/fresh CristalACTiV ™G5-TiO$_2$

In order to prepare 110g of the catalyst, 92g of commercially available ("fresh") $TiO_2$ (CristalACTiV ™G5from Tronox) with a BET value of 250 m$^2$/g were introduced in an 1l high-shear force mixer (Eirich) and stirred. A vanadium oxalate solution characterized by 14 wt.% $V_2O_5$ content (Treibacher Industrie AG) was slowly added to the powder through a funnel while continuous stirring to obtain a loading of 10% $V_2O_5$ on the powder. After complete addition of the vanadium oxalate solution, 7.5g montmorillonite K10 (Aldrich) were added and then mixed up to 300s for complete homogenization. The wet powder was directly calcined at 300°C/5h in a static air muffle furnace. The calcined material was sieved through a 250 μm sieve. Finally, the calcined material was pressed into pellets and sieved in the range of 200-315μm for the catalytic tests described below.

Comparative Example 8: 7.6% $V_2O_5$ - 4.76% Montmorillonite/AK1®-TiO$_2$

In order to prepare 105g of the catalyst, 92g of commercially available $TiO_2$ powder (AK1® from Venator) with a BET value of 91 m$^2$/g were introduced in 1l high-shear force mixer (Eirich) and stirred. A vanadium oxalate solution characterized by 14wt.%$V_2O_5$ content (Treibacher Industrie AG) was slowly added to the powder through a funnel while continuous stirring to obtain a loading of 8% $V_2O_5$ on the powder. After complete addition of the vanadium oxalate solution. 5g montmorillonite K10 (Aldrich) were added and then mixed up to 300s for complete homogenization. The wet powder was directly calcined at 300°C/5h in a static air muffle furnace. The calcined material was sieved through a 250 μm sieve. Finally, the calcined material was pressed into pellets and sieved in the range of 200-315 μm for the catalytic tests described below.

**Sample characterization**

All catalysts and $TiO_2$ powders were analytically characterized by BET surface area measurement. The BET surface area of the materials was measured by BET method applied to the linear portion of the $N_2$ adsorption isotherm curve at -196°C employing a Tristar 3020 Micromeritics apparatus. The materials were pre-treated at 200°C for 1.5h prior analysis.

**Catalytic tests**

All catalytic tests were conducted in a 16-channel-flow-through quartz reactor. A quadrupole mass spectrometer (PrismaQMS 200, Pfeiffer Vacuum Technology) was used for product analysis in the effluent gases.

The quartz reaction tubes were loaded with a fixed amount of catalyst which corresponds to 30 mg. Only two tubes are loaded with bare SiC as a blank reference and a channel always hosts a reference material for reproducibility comparison. SiC was used as diluent.

Each catalyst was loaded in three different tubes and a mean value of SCR catalytic activity was then calculated. The diluent SiC was added to level each catalytic bed up to 100 mg. In this way, the same space velocity and, consequently, the same contact time could be guaranteed in each channel. All gases were introduced by dosing with mass flow controllers the required amounts of each species from calibrated gas cylinders. Water was introduced by means of an injection pump.

In Table 2 below, there are set out reaction conditions and gas composition for catalytic tests.

Table 2

| Catalyst weight | 30 mg |
|---|---|
| Particle size | 200-315 μm |
| Total flow | 90 mL/min |
| Space velocity | 100 000 h$^{-1}$ |
| Temperature | 190°C |

(continued)

| Gas composition | Initial (t=0-1h) | During treatment (t=1-19 h) |
|---|---|---|
| NO conc. | 210 ppm | 210 ppm |
| NH$_3$ conc. | 170 ppm | 170 ppm |
| O$_2$ conc. | 5vol.% | 5vol.% |
| H$_2$O conc. | 5vol.% | 5vol.% |
| Ar conc. | 2vol.% | 2vol.% |
| SO$_2$ conc. | | 50 ppm |
| He conc. | balance | balance |

Initial deNO$_x$ activity (in terms of NO$_x$ in the effluent gas) was measured before introducing SO$_2$ in the SCR gas atmosphere after 1h stabilization (t=0-1h). It was calculated according to the equation:

$$deNOx \% = \frac{[NO]in - [NO]out}{[NO]in} * 100$$

After adding SO$_2$, the catalysts were treated time-on stream for 19h. After 19 hours, deNO$_x$ was calculated according to the above formula, and the difference between the initial and final value of deNO$_x$ was used to identify the percent of performance degradation attributable to the effect of SO$_2$.

**Results of the catalytic tests of the SCR catalyst powders**

Testing was performed according to the parameters as disclosed in Table 2 above.

Table 3 below shows the NOx conversion and the degradation after 19 hours because of sulfur impact in % (as compared with the original conversion rate) at a temperature of 190°C with catalysts prepared according to examples 1 to 15 and comparative examples 1 to 8.

Table 3

| Example | BET [g/cm$^2$] | NOx conversion [%] | deNO$_x$ degradation after 19h on stream under SO$_2$ [%] |
|---|---|---|---|
| **Example 1** | 126 | 65 | 3 |
| **Example 2** | 129 | 67 | 3 |
| **Example 3** | 133 | 64 | 4 |
| **Example 4** | 151 | 65 | 4 |
| **Example 5** | 129 | 74 | 5 |
| **Example 6** | 131 | 74 | 4 |
| **Example 7** | 133 | 63 | 1 |
| **Example 8** | 136 | 54 | 1 |
| **Example 9** | 138 | 50 | 1 |
| **Example 10** | 129 | 74 | 3 |
| **Example 11** | 131 | 72 | 4 |
| **Example 12** | 131 | 70 | 5 |
| **Example 13** | 124 | 74 | 6 |
| **Example 14** | 128 | 76 | 5 |
| **Example 15** | 120 | 68 | 6 |
| **Comparative Example 1** | 118 | 69 | 15 |

(continued)

| Example | BET [g/cm$^2$] | NOx conversion [%] | deNO$_x$ degradation after 19h on stream under SO$_2$ [%] |
|---|---|---|---|
| **Comparative Example 2** | 178 | 68 | 8 |
| **Comparative Example 3** | 69 | 29 | 7 |
| **Comparative Example 4** | 91 | 9 | Not detectable |
| **Comparative Example 5** | 81 | 19 | Not detectable |
| **Comparative Example 6** | 74 | 28 | 3 |
| **Comparative Example 7** | 214 | 34 | 7 |
| **Comparative Example 8** | 74 | 59 | 34 |

"Not detectable" means that no degradation was observed, however, in these examples the conversion rate was already very low at the beginning of the experiment.

As shown in Table 3, all compositions according to the invention exhibited improved stability under SO$_2$ containing flow after 19h exposure.

In some examples (e.g. Examples 13 and 14), an increased sulfur resistance effect could be observed even at higher V$_2$O$_5$ content than used in the Comparative Examples. For instance, Comparative Example 3 having only 3% V$_2$O$_5$ shows higher degradation than Examples 13 and 14 having 9.5 and 9.1 % V$_2$O$_5$, respectively.

Comparative Example 1, which did not include clay, shows very poor results in terms of resistance against SO$_2$-induced degradation after 19h of treatment.

Comparative Example 2 corresponds to a composition comprising zeolite without any clay, as described in e.g. US 2022/0226803 A1. Also in this case, all inventive compositions outperform the Comparative Example 2 in terms of sulfur resistance.

Comparative Examples 3 to 6 were produced according to EP 3 323 504 B1, using pillared clays showing poor SCR activity and low sulfur resistance (if activity was high enough to detect it) despite their low vanadium content.

It is also noted that the overall time needed to prepare the samples according to the method described in EP 3 323 504 B1 was 50 hours for the preparation of the pillared clay plus appr. 18h for the preparation of the SCR catalyst. In contrast, the process according to the present invention takes approx. 8 hours to prepare the catalyst composition as defined herein.

In Comparative Example 7, a fresh TiO$_2$ powder characterized by a BET surface area of 250 m$^2$/g was used to prepare the catalyst to obtain a calcined powder having a BET surface area of 214 m$^2$/g. The results in Table 2 reveal that Comparative Example 7 exhibited a poorer performance in terms of NO$_x$ conversion and sulfur resistance than the compositions according to the invention (e.g. Example 6)

A low-surface area TiO$_2$ powder (BET of 91 m$^2$/g) in Comparative Example 8 was used which led also to poor sulfur resistance after 19h under SO$_2$, compared to e.g., Example 5 according to the invention

The results show that the catalytic compositions have an excellent deNO$_x$ performance and resistance against sulfur degradation at a low temperature (190°C). These findings also show that resistance against deactivation due to ABS deposition is guaranteed for a minimum of 19h under time on stream conditions where SO$_2$ and water vapor are present in the gas feed (gas mixture including NH$_3$, O$_2$, NO$_x$, inert gas).

**Claims**

1.   A calcined catalyst composition comprising a mixture of

        a) a Vanadium oxide supported by TiO$_2$ and
        b) a non-pillared clay,

     wherein the composition has a BET surface area ranging from 100 to 160 m$^2$/g.

2.   Composition according to claim 1, **characterized in that** the composition is in powdered or granulated form.

3.   Composition according to claim 1 or 2, **characterized in that** the composition comprises 4 to 10 % by weight of the Vanadium oxide, expressed as V$_2$O$_5$.

4. Composition according to any of the preceding claims, **characterized in that** the composition comprises $TiO_2$ in an amount of 75 to 95 % by weight.

5. Composition according to any of the preceding claims, **characterized in that** the non-pillared clay comprises or consists of montmorillonite.

6. Composition according to any of the preceding claims, **characterized in that** the composition comprises the non-pillared clay in an amount of 4 to 15 % by weight.

7. Composition according to any of the preceding claims, **characterized in that** the composition comprises iron in an amount of 1 to 3 % by weight, preferably 1.5 to 3% by weight, calculated as $Fe_2O_3$.

8. A process for the preparation of a catalyst composition according to any preceding claims, comprising the steps of:

   a) Calcining a $TiO_2$ precursor to obtain a calcined $TiO_2$ powder, wherein the calcined $TiO_2$ powder has a BET surface area ranging from 125 to 160 $m^2/g$,
   b) Impregnating the calcined $TiO_2$ powder of step a) with a precursor of vanadium oxide,
   c) Mixing of the mixture of step b) with a non-pillared clay,
   d) Calcining the mixture of step c) and,
   e) Optionally granulating the mixture of step c) before step d) to obtain the catalyst composition in granulated form.

9. Process according to claim 8, **characterized in that** $Fe_2O_3$ is added in the course of step a), b) and/or c).

10. Process according to claim 8 or 9, further comprising transforming the calcined catalyst composition into a shaped form.

11. The use of a catalyst composition according to any of claims 1 to 7 as SCR catalyst for removing nitrogen oxides.

12. Use according to claim 11, **characterized in that** the catalyst composition is employed at temperatures of 200°C or lower, preferably from 160°C to 200°C, most preferably from 180°C to 200°C.

| | Europäisches Patentamt European Patent Office Office européen des brevets | **EUROPEAN SEARCH REPORT** | **Application Number** EP 24 17 7917 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 35 31 871 A1 (UBE INDUSTRIES [JP]) 20 March 1986 (1986-03-20) * the whole document * ----- | 1-12 | INV. B01J21/06 B01D53/00 B01J21/16 |
| A,D | US 2018/200697 A1 (SUNG SAM KYUNG [KR] ET AL) 19 July 2018 (2018-07-19) * the whole document * ----- | 1-12 | B01J23/22 B01J23/847 B01J35/61 B01J37/00 B01J37/02 B01J37/04 B01J37/08 |

**TECHNICAL FIELDS SEARCHED (IPC)**

B01J
B01D

The present search report has been drawn up for all claims

| Place of search | Date of completion of the search | Examiner |
|---|---|---|
| Munich | 12 November 2024 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7917

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | | Publication date | Patent family member(s) | | Publication date |
|---|---|---|---|---|---|
| DE 3531871 | A1 | 20-03-1986 | DE | 3531871 A1 | 20-03-1986 |
| | | | JP | H0242536 B2 | 25-09-1990 |
| | | | JP | S6164334 A | 02-04-1986 |
| US 2018200697 | A1 | 19-07-2018 | DK | 3323504 T3 | 03-10-2022 |
| | | | EP | 3323504 A1 | 23-05-2018 |
| | | | JP | 6595088 B2 | 23-10-2019 |
| | | | JP | 2018527168 A | 20-09-2018 |
| | | | KR | 20170009150 A | 25-01-2017 |
| | | | US | 2018200697 A1 | 19-07-2018 |
| | | | WO | 2017010775 A1 | 19-01-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220226803 A1
- CN 105727935 A
- CN 106423192 B
- CN 112844441 A
- KR 20170028641 A
- CN 109999828 A
- CN 114849682 A
- CN 102225335 A
- US 6475944 B1
- KR 100415434 B1
- US 9371765 B2
- CN 114733510 A
- EP 3323504 B1
- CN 106179320 A
- DE 3531871 A1

### Non-patent literature cited in the description

- **G. BUSCA et al.** Chemical and mechanistic aspects of the selective catalytic reduction of NOx by ammonia over oxide catalysts: A review. *Applied Catalysis B*, 1998, vol. 18, 1-36
- **J-K LAI** ; **I. WACHS**. A perspective on the selective catalytic reduction (SCR) of NO with NH3 by supported V2O5-WO3/TiO2 catalysts. *ACS Catalysis*, vol. 8, 6537-6551
- **I. SONG et al.** Simple physical mixing of zeolite prevents sulfur deactivation of vanadia catalyst for NOx removal. *Nature communications*, 2021, vol. 12, 901
- **J.P DUNN**. Oxidation of SO2 over supported metal oxide catalysts. *Journal of Catalysis*, 1999, vol. 181, 233-243
- **GUO et al.** Conquering ammonium bisulfate poison over low-temperature NH3-SCR catalysts: A critical review.. *Applied Catalysis B*, 2021, vol. 297, 120388
- *Environmental Science & Technology*, 2020, vol. 54, 12612-12620
- **YANG et al.** TiO2-pillared Clays with Well-ordered Porous Structure and Excellent Photocatalytic Activity. *RSC Advances*, 2015, vol. 5, 8210-8215
- **BUTMAN et al.** Photocatalytic and adsorption properties of TiO2-pillared montmorillonite obtained by hydrothermally activated intercalation of titanium polyhydroxo complexes. *Beilstein Journal of Nanotechnology*, 2018, vol. 9, 364-378
- Preparation, characterization and catalytic activity of titania pillared montmorillonite clays. *Microporous andMesoporous Materials*, 2016, vol. 93, 82-89